# FASCICULE DE BREVET EUROPEEN

(11) **EP 4 054 935 B1**
(45) Date de publication et mention de la délivrance du brevet: **07.08.2024**
(21) Numéro de dépôt: 20816271.9
(22) Date de dépôt: 05.11.2020
(51) Int. Cl.: B64D 27/02, B64D 27/24, B64D 35/02, H02J 1/10, H02J 7/14, H02J 7/34

(54) **ARCHITECTURE PROPULSIVE HYBRIDE ET AÉRONEF COMPORTANT UNE TELLE ARCHITECTURE**
HYBRIDE ANTRIEBSARCHITEKTUR UND FLUGZEUG, DAS EINE SOLCHE ARCHITEKTUR ENTHÄLT
HYBRID PROPULSION ARCHITECTURE AND AIRCRAFT CONTAINING SUCH AN ARCHITECTURE

(30) Priorité: 05.11.2019 FR 1912405
(43) Date de publication de la demande: 14.09.2022
(73) Titulaire: SAFRAN, 75015 Paris (FR)
(72) Inventeur: BIAUJAUD, Rémy, 77550 MOISSY-CRAMAYEL (FR); MEUNIER, René, 77550 MOISSY-CRAMAYEL (FR); MORA, Jérôme Didier, 77550 MOISSY-CRAMAYEL (FR); ROUGIER, Florent, 77550 MOISSY-CRAMAYEL (FR); VALIRE, Jérôme, 77550 MOISSY-CRAMAYEL (FR)
(74) Mandataire: Gevers & Orès
(86) Numéro de dépôt international: PCT/FR2020/052005
(87) Numéro de publication internationale: WO 2021/089948

(56) Documents cités:
- EP-A2- 2 040 370
- FR-A1- 3 079 210
- US-A1- 2016 016 670

## Description

### DOMAINE TECHNIQUE

L'invention concerne une architecture propulsive hybride, et un aéronef à décollage et atterrissage vertical (VTOL, acronyme de l'expression anglaise « Vertical and Take-Off Landing »), multi-rotors, tel qu'un quadricoptère à double rotors contra rotatifs, comportant une telle architecture propulsive hybride.

### TECHNIQUE ANTÉRIEURE

L'état de la technique comprend notamment les documents FR-A1-3 079 210, EP-A2-2 040 370 et US-A1-2016/016670. Le document FR-A1-3 079 210 décrit une architecture propulsive hybride qui comprend une première source d'une première nature d'énergie, des deuxièmes sources d'une deuxième nature d'énergie, des systèmes électriques propulsifs et un réseau de distribution d'énergie électrique qui connecte l'ensemble. De façon connue, une architecture propulsive hybride est une architecture qui fait intervenir plusieurs sources d'énergie de nature différente, par exemple électrique-thermique et électrochimique, pour alimenter des systèmes propulsifs, et donc qui fait intervenir plusieurs sources d'énergie de nature différente pour chaque canal de propulsion.

Il est connu une architecture propulsive hybride, dans laquelle il y a autant de sources d'énergie de chaque nature qu'il existe de canaux de propulsion.

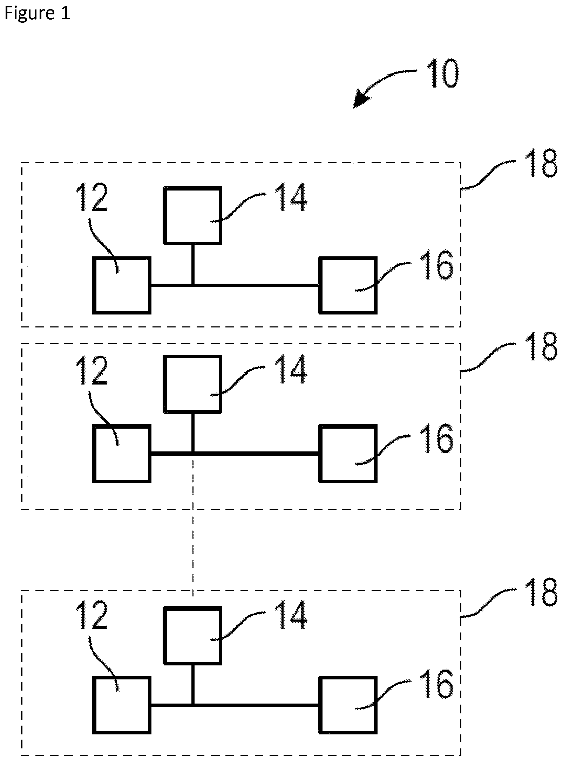

Comme représenté sur la figure 1, l'architecture 10 comporte une pluralité de canaux 18 de propulsion, dont trois sont représentés, chaque canal 18 de propulsion comprenant une première source 12 d'une première nature d'énergie, une deuxième source 14 d'une deuxième nature d'énergie, différente de la première nature d'énergie, et une ou une pluralité de charges 16. Les première et deuxième sources 12, 14 sont distinctes entre chaque canal 18 de propulsion. Dans cette architecture 10, il y a donc autant de première source 12, que de deuxième source 14, que de canal 18 de propulsion.

Toutefois, cette architecture est coûteuse, puisqu'elle intègre un nombre de sources important.

Afin de réduire les coûts et la masse de l'architecture, il a été proposé de réduire le nombre de sources, par exemple en n'intégrant dans l'architecture qu'une seule source d'une première nature d'énergie.

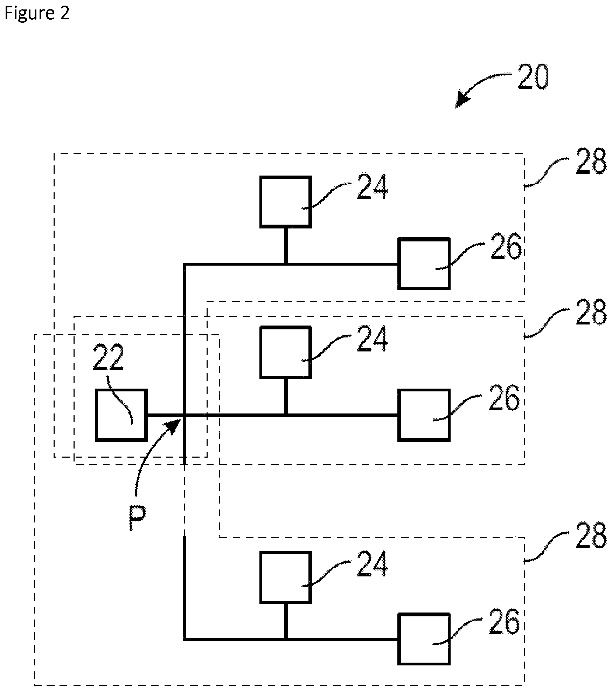

Comme représenté sur la figure 2, l'architecture 20 comporte une seule première source 22 d'une première nature d'énergie. Chaque canal 28 de propulsion comprend la première source 22, une deuxième source 24 d'une deuxième nature d'énergie, différente de la première nature d'énergie, et une ou une pluralité de charges 26. Les deuxièmes sources 24 sont distinctes entre les différents canaux 28 de propulsion, tandis que la première source 22 est commune à tous les canaux 28 de propulsion. Ainsi, dans cette architecture 20, il y a autant de deuxièmes sources 24, que de canal 28 de propulsion, mais une seule première source 22 qui alimente tous les canaux 28 de propulsion.

Toutefois, dans une telle architecture, il y a un point commun P entre les différents canaux de propulsion, qui peut propager un défaut d'un canal de propulsion vers un autre canal de propulsion, et ainsi générer la perte de plusieurs canaux de propulsion suite à une panne simple. Par exemple, un court-circuit sur une des charges peut se propager aux autres charges de l'architecture.

Afin de résoudre ce problème, il a été proposé d'intégrer le point commun entre les différents canaux de propulsion à la première source de première nature d'énergie. Ainsi, la première source ne propage pas un défaut d'un canal de propulsion vers un autre canal de propulsion.

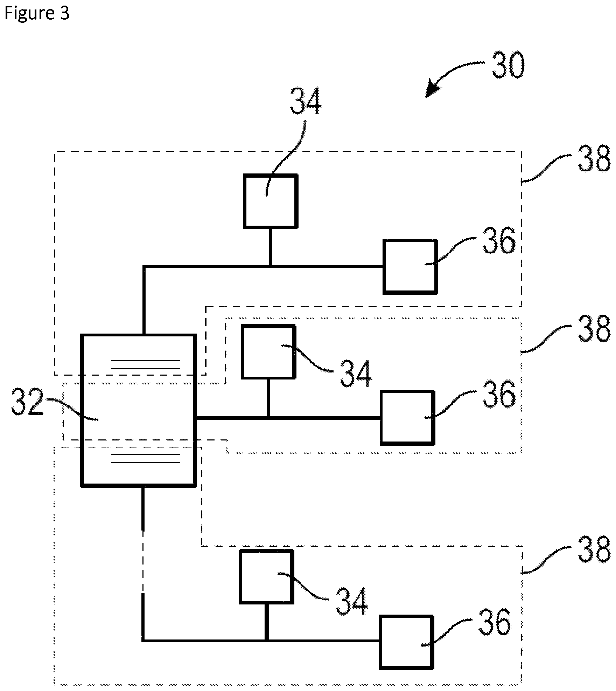

Comme représenté sur la figure 3, l'architecture 30 comporte une seule première source 32 d'une première nature d'énergie, qui intègre le point commun entre les différents canaux 38 de propulsion. Chaque canal 38 de propulsion comprend la première source 32, une deuxième source 34 d'une deuxième nature d'énergie, différente de la première nature d'énergie, et une ou une pluralité de charges 36. Les deuxièmes sources 34 sont distinctes entre les différents canaux 38 de propulsion, tandis que la première source 32 est commune à tous les canaux 38 de propulsion. Ainsi, dans cette architecture 30, il y a autant de deuxièmes sources 34, que de canal 38 de propulsion, mais une seule première source 32 qui alimente tous les canaux 38 de propulsion.

Toutefois, dans cette architecture, le design de la première source est contraint, tant en termes de coûts, qu'en terme de complexité.

De plus, les solutions technologiques permettant de réaliser un découplage des canaux de propulsion au sein de la première source sont actuellement mal maîtrisées, et certains modes de défaillance ne sont pas résolus. Par exemple, une solution actuellement proposée est d'utiliser un alternateur à aimant permanent à trois sorties isolées, permettant ainsi d'alimenter trois canaux de propulsion. Cependant, le design d'un tel l'alternateur ne permet pas une indépendance des sorties, en particulier en cas de défaut. Ainsi, un court-circuit sur un canal de propulsion peut se propager sur les autres canaux de propulsion.

De plus, cette architecture manque de flexibilité dans la distribution de puissance. En effet, bien que l'alternateur soit dimensionné pour une puissance de 300 kW, chaque sortie est dimensionnée pour une puissance de 100 kW. Ainsi, le système électrique est incapable de fournir une puissance supérieure à 100 kW à un canal de propulsion, même si la consommation totale du système électrique est inférieure à une puissance de 300 kW.

Pour remédier à cet inconvénient, il serait nécessaire de sur-dimensionner l'alternateur. Par exemple, pour fournir une puissance de 150 kW sur deux des trois sorties, et une puissance nulle de 0 kW sur la dernière sortie (reconfiguration du système électrique, suite à un défaut par exemple), soit une puissance de 300 kW au total, il est nécessaire de dimensionner l'alternateur pour une puissance totale de 450 kW, ce qui a un impact sur sa masse d'environ 50 %.

L'invention a pour objectif de proposer une solution permettant de remédier à au moins certains de ces inconvénients.

### RÉSUMÉ DE L'INVENTION

L'invention a pour objectif de pouvoir réduire le nombre de sources de l'architecture propulsive hybride, en créant des points communs par lesquels l'énergie électrique peut transiter d'une première source unique d'une première nature d'énergie vers différentes charges, tout en garantissant la non-propagation des défauts sur les charges par ces points communs.

À cet effet, l'invention concerne une architecture propulsive hybride pour un aéronef, comprenant :
- une première source, d'une première nature, d'énergie électrique,
- une pluralité de deuxièmes sources, d'une deuxième nature, d'énergie électrique, ladite deuxième nature étant différente de ladite première nature,
- une pluralité de systèmes électriques propulsifs,
- un réseau de distribution d'énergie électrique connectant ladite première source et lesdites deuxièmes sources auxdits systèmes électriques propulsifs de sorte que chaque système électrique propulsif est alimenté par ladite première source et par une desdites deuxièmes sources,
- des canaux de propulsion, chaque canal de propulsion comprenant ladite première source, une desdites deuxièmes sources, un desdits systèmes électriques propulsifs, et une portion du réseau de distribution d'énergie électrique,
ladite architecture étant caractérisée en ce qu'elle comprend en outre :
- des moyens de ségrégation desdits systèmes électriques propulsifs, lesdits moyens de ségrégation étant agencés sur ledit réseau de distribution d'énergie électrique et configurés pour imposer un sens de circulation de la puissance électrique de ladite première source auxdits systèmes électriques propulsifs de sorte que lesdits canaux de propulsion sont ségrégués.

L'architecture selon l'invention permet de réduire le nombre de sources d'énergie, ce qui permet de réduire les coûts et la masse totale de l'architecture.

De plus, la première source d'énergie est simplifiée par rapport à l'art antérieur, et le nombre de ses composants est réduit, ce qui augmente la fiabilité de l'architecture et en diminue les coûts.

Un canal de propulsion comprend la première source, une deuxième source, un système électrique propulsif (également appelé charge) et une portion du réseau de distribution d'énergie électrique entre ces différents éléments de l'architecture.

Les moyens de ségrégation permettent de garantir la ségrégation des canaux de propulsion. Ainsi, l'architecture selon l'invention est avantageusement tolérante à une panne simple.

Selon l'invention, les flux d'énergie électrique sont forcés pour être unidirectionnels dans les canaux de propulsion, de manière à éviter les propagations de pannes entre les différents canaux de propulsion. L'énergie électrique est forcée à transiter du point commun vers les charges, mais ne peut transiter des charges vers le point commun.

Selon un mode de réalisation, la première source d'énergie peut être une source de génération électrique-thermique, et les deuxièmes sources d'énergie peuvent être des sources de stockage électrochimique.

L'architecture selon l'invention permet donc d'alimenter une pluralité de canaux de propulsion, à partir d'une pluralité de sources de stockage électrochimique et d'une unique source de génération électrique-thermique ne fournissant qu'un unique canal de puissance.

L'architecture selon l'invention permet d'alimenter la pluralité de canaux de propulsion de manière simultanée, en garantissant qu'aucune panne simple ne peut générer la perte de plus d'un canal de propulsion.

L'architecture selon l'invention permet également une répartition automatique de la puissance électrique de la source de génération électrique-thermique, sans canal de communication reliant les différents canaux de propulsion et la source de génération électrique-thermique.

Le réseau de distribution d'énergie électrique peut être un réseau haute tension courant continu (HVDC, acronyme de l'expression anglaise « High Voltage Direct Current »). Dans ce cas, les moyens de ségrégation peuvent comprendre des diodes.

L'architecture selon l'invention peut comprendre des convertisseurs électroniques de puissance connectés au réseau de distribution d'énergie électrique. Avantageusement, les convertisseurs électroniques de puissance permettent d'améliorer le pilotage de la distribution de puissance électrique dans les différents canaux de propulsion.

Selon un mode de réalisation, les convertisseurs électroniques de puissance sont connectés entre les deuxièmes sources et les systèmes électriques propulsifs.

Selon un autre mode de réalisation, les convertisseurs électroniques de puissance sont connectés entre les moyens de ségrégation et les systèmes électriques propulsifs.

L'architecture selon l'invention peut comprendre des deuxièmes moyens de ségrégation des systèmes électriques propulsifs agencés sur le réseau de distribution d'énergie électrique et configurés pour imposer un sens de circulation de la puissance électrique des deuxièmes sources aux systèmes électriques propulsifs. Les deuxièmes moyens de ségrégation peuvent comprendre des diodes.

Selon un mode de réalisation, les convertisseurs électroniques de puissance sont connectés entre les deuxièmes sources et les systèmes électriques propulsifs, en parallèle des deuxièmes moyens de ségrégation.

De préférence, les première et deuxièmes sources sont ségréguées les unes des autres. Autrement dit, il n'y a pas de communication entre les différentes source d'énergie. Plus précisément, la première source peut être ségréguée de chaque deuxième source et chaque deuxième source peut être ségréguée de la première source et des autres deuxièmes sources.

Selon un mode de réalisation, la première source comprend un générateur à fréquence variable (VFG, acronyme de l'expression anglaise « Variable Frequency Generator »). Dans ce cas, l'architecture comporte en outre un redresseur passif connecté à la première source. Le redresseur peut être un convertisseur alternatif-continu (AC-DC, acronyme de l'expression anglaise « Alternative Current - Direct Current »).

Selon un mode de réalisation, la première source est une batterie et les deuxièmes sources sont des machines à aimants permanents (PMG, acronyme de l'expression anglaise « Permanent Magnet Generator »).

Une batterie est une source électrochimique. Par exemple, la première source peut être une batterie lithium-ion.

Une machine à aimant permanent est une source électromécanique.

L'invention concerne également un aéronef, notamment à décollage et atterrissage vertical, multi-rotors, caractérisé en ce qu'il comporte une architecture propulsive hybride selon l'invention.

Selon un mode de réalisation, l'aéronef est un quadricoptère à double rotors contrarotatifs VTOL.

Avantageusement, l'aéronef selon l'invention est tolérant à une panne simple. Plus précisément, aucune défaillance n'entraine la perte de plus d'une paire de rotors, c'est-à-dire de deux rotors diamétralement opposés.

### BRÈVE DESCRIPTION DES DESSINS

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
[Fig. 1] la figure 1 représente une architecture propulsive hybride selon un premier mode de réalisation de l'art antérieur,
[Fig. 2] la figure 2 représente une architecture propulsive hybride selon un deuxième mode de réalisation de l'art antérieur,
[Fig. 3] la figure 3 représente une architecture propulsive hybride selon un troisième mode de réalisation de l'art antérieur,
[Fig. 4] la figure 4 représente une architecture propulsive hybride selon l'invention,
[Fig. 5] la figure 5 représente l'architecture propulsive hybride de la figure 4, selon un premier mode de réalisation de l'invention,
[Fig. 6] la figure 6 représente l'architecture propulsive hybride de la figure 4, selon un deuxième mode de réalisation de l'invention,
[Fig. 7] la figure 7 représente l'architecture propulsive hybride de la figure 4, selon un troisième mode de réalisation de l'invention, et
[Fig. 8] la figure 8 représente l'architecture propulsive hybride de la figure 4, selon un quatrième mode de réalisation de l'invention.

Les éléments ayant les mêmes fonctions dans les différentes mises en oeuvre ont les mêmes références dans les figures.

### DESCRIPTION DES MODES DE RÉALISATION

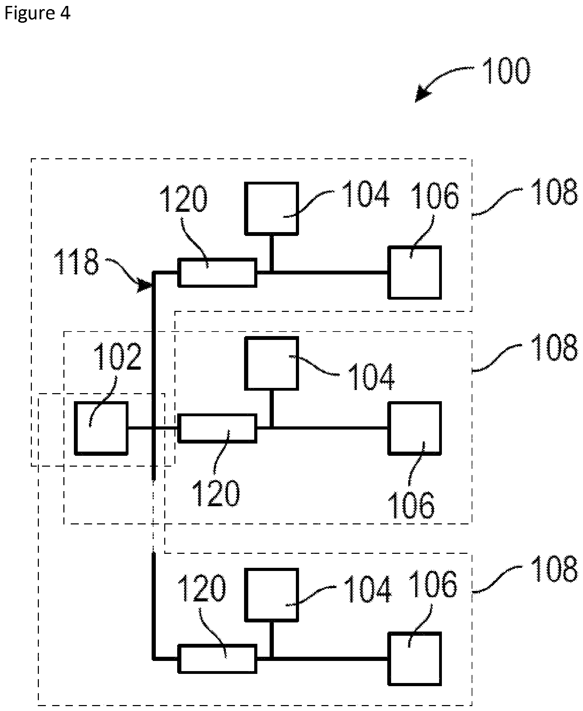

Les figures 4 à 8 représentent une architecture 100 propulsive hybride selon l'invention, pour un aéronef VTOL, tel qu'un quadricoptère à double rotors contrarotatifs.

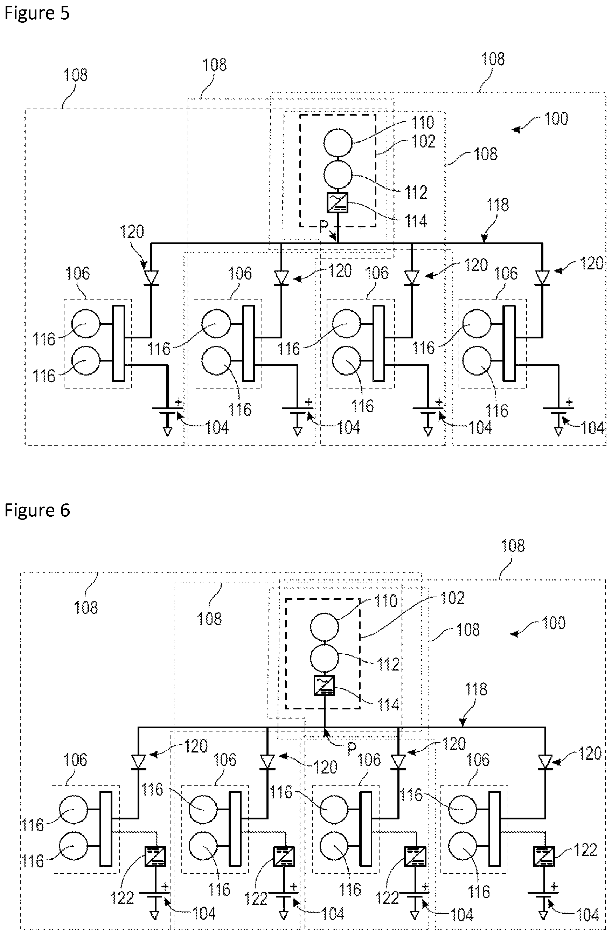

L'architecture 100 comporte une unique première source 102 d'une première nature d'énergie. Par exemple, comme représenté sur les figures 5 à 8, la première source 102 comporte une turbine à gaz 110 et un générateur à fréquence variable 112, suivi d'un redresseur 114 passif. Le redresseur 114 est un convertisseur AC-DC.

La première source 102 peut également être une batterie, par exemple une batterie lithium-ion. Ainsi, la première source 102 peut être une source de génération électrique-thermique, ou une source de stockage électrochimique.

L'architecture 100 comporte des deuxièmes sources 104 d'une deuxième nature d'énergie, qui est différente de la première nature d'énergie de la première source 102. Sur la figure 4, trois deuxièmes sources 104 sont représentées, et sur les figures 5 à 8, quatre deuxièmes sources 104 sont représentées. Par exemple, les deuxièmes sources 104 peuvent comporter des machines à aimants permanents. Comme représenté sur les figures 5 à 8, les deuxièmes sources 104 peuvent également être des batteries. Ainsi, les deuxièmes sources 104 peuvent être des sources de génération électrique-magnétique, ou des sources de stockage électrochimique.

De préférence, les première et deuxièmes sources 102, 104 sont ségréguées les unes des autres. Autrement dit, il n'y a pas de communication entre les différentes sources d'énergie. Par exemple, la première source 102 est ségréguée de chaque deuxième source 104, et chaque deuxième source 104 est ségréguée des autres deuxièmes sources 104 et de la première source 102.

L'architecture 100 comporte des systèmes électriques propulsifs 106. Sur la figure 4, trois systèmes électriques propulsifs 106 sont représentés, et sur les figures 5 à 8, quatre systèmes électriques propulsifs 106 sont représentés. Le système électrique propulsif 106 peut comporter un convertisseur DC-AC (non représenté), des moteurs électriques 116 reliés audit convertisseur DC-AC de sorte qu'en fonctionnement le convertisseur DC-AC alimente les moteurs électriques 116 en courant alternatif, et des hélices (non représentées) accouplées aux moteurs électriques 116 de sorte qu'en fonctionnement les moteurs électriques 116 entraînent les hélices.

L'architecture 100 comporte un réseau 118 de distribution d'énergie électrique qui connecte la première source 102 et les deuxièmes sources 104 aux systèmes électriques propulsifs 106. Le réseau 118 de distribution d'énergie électrique peut être un réseau HVDC.

En particulier, chaque système électrique propulsif 106 est alimenté, via le réseau 118 de distribution d'énergie électrique, par la première source 102 et par une des deuxièmes sources 104.

L'architecture 100 comporte des canaux 108 de propulsion. Sur la figure 4, trois canaux 108 de propulsion sont représentés, et sur les figures 5 à 8, quatre canaux 108 de propulsion sont représentés. Chaque canal 108 de propulsion comporte la première source 102, une deuxième source 104, un système électrique propulsif 106, et une portion du réseau 118 de distribution d'énergie électrique qui relie ensemble la première source, la deuxième sources 104 et le système électrique propulsif 106.

L'architecture 100 comporte également des moyens de ségrégation 120 des systèmes électriques propulsifs 106. Les moyens de ségrégation 120 sont agencés sur le réseau 118 de distribution d'énergie électrique et sont configurés pour imposer un sens de circulation de la puissance électrique de la première source 102 aux systèmes électriques propulsifs 106. Les moyens de ségrégation 120 permettent de garantir la ségrégation des canaux 108 de propulsion.

Les moyens de ségrégation 120 permettent de rendre les flux d'énergie électrique unidirectionnels de la première source 102 vers les systèmes électriques propulsifs 106. L'énergie électrique est forcée à transiter du point commun P vers les systèmes électriques propulsifs 106, mais ne peut transiter des systèmes électriques propulsifs 106 vers le point commun P. Chaque canal 108 de propulsion comporte des moyens de ségrégation 120 entre la première source 102 et le système électrique propulsif 106.

Les moyens de ségrégation 120 peuvent comprendre des diodes, comme représentées sur les figures 5 à 8.

L'architecture 100 peut comprendre des convertisseurs électroniques de puissance connectés au réseau 118 de distribution d'énergie électrique pour améliorer le pilotage de l'énergie électrique dans les différents canaux 108 de propulsion.

Selon un mode de réalisation représenté en figure 6, des convertisseurs 122 électroniques de puissance peuvent être connectés entre chaque deuxième source 104 et chaque système électrique propulsif 106. Les convertisseurs 122 peuvent être des convertisseurs DC-DC.

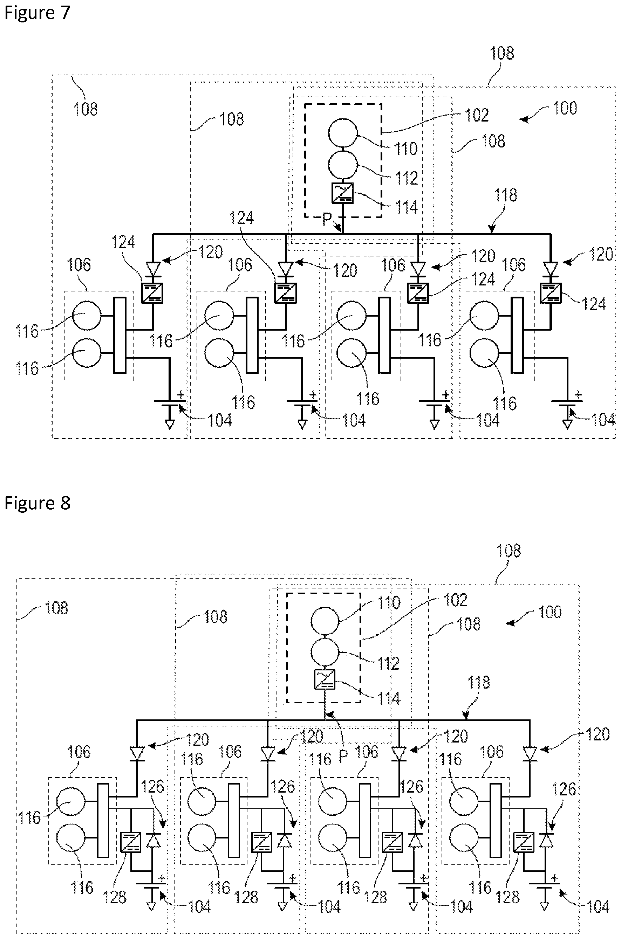

Selon un mode de réalisation représenté en figure 7, les convertisseurs 124 électroniques de puissance peuvent être connectés sur chaque canal 118 de propulsion entre les moyens de ségrégation 120 et le système électrique propulsif 106. Les convertisseurs 124 peuvent être des convertisseurs DC-DC.

Selon un mode de réalisation représenté en figure 8, l'architecture 100 peut comprendre des deuxièmes moyens de ségrégation 126 des systèmes électriques propulsifs 106. Les moyens de ségrégation 126 sont agencés sur le réseau 118 de distribution d'énergie électrique et sont configurés pour imposer un sens de circulation de la puissance électrique des deuxièmes sources 104 aux systèmes électriques propulsifs 106. Les moyens de ségrégation 126 permettent de rendre les flux d'énergie électrique unidirectionnels de la deuxième source 104 vers les systèmes électriques propulsifs 106. Des convertisseurs 128 électroniques de puissance peuvent être connectés sur chaque canal 118 de propulsion entre la deuxième source 104 et le système électrique propulsif 106, en parallèle des moyens de ségrégation 126. Les convertisseurs 128 peuvent être des convertisseurs DC-DC.

L'architecture propulsive hybride selon l'invention a été principalement décrite pour un quadricoptère VTOL à double rotors contrarotatifs, mais peut bien entendu être intégrée dans tout type d'aéronef.

## Revendications

1. Architecture (100) propulsive hybride pour un aéronef, comprenant :
- une première source (102), d'une première nature, d'énergie électrique,
- une pluralité de deuxièmes sources (104), d'une deuxième nature, d'énergie électrique, ladite deuxième nature étant différente de ladite première nature,
- une pluralité de systèmes électriques propulsifs (106),
- un réseau (118) de distribution d'énergie électrique connectant ladite première source (102) et lesdites deuxièmes sources (104) auxdits systèmes électriques propulsifs (106) de sorte que chaque système électrique propulsif (106) est alimenté par ladite première source (102) et par une desdites deuxièmes sources (104),
- des canaux de propulsion (108), chaque canal de propulsion (108) comprenant ladite première source (102), une desdites deuxièmes sources (104), un desdits systèmes électriques propulsifs (106), et une portion du réseau (118) de distribution d'énergie électrique,
ladite architecture (100) étant **caractérisée en ce qu'**elle comprend en outre :
- des moyens de ségrégation (120) desdits systèmes électriques propulsifs (106), lesdits moyens de ségrégation (120) étant agencés sur le réseau (118) de distribution d'énergie électrique et configurés pour imposer un sens de circulation de la puissance électrique de ladite première source (102) auxdits systèmes électriques propulsifs (106) de sorte que lesdits canaux de propulsion (108) sont ségrégués.

2. Architecture (100) propulsive hybride selon la revendication 1, dans laquelle le réseau (118) de distribution d'énergie électrique est un réseau haute tension courant continu, et dans laquelle lesdits moyens de ségrégation (120) comprennent des diodes.

3. Architecture (100) propulsive hybride selon l'une des revendications 1 ou 2, comprenant des convertisseurs (122, 124, 128) électroniques de puissance connectés au réseau (118) de distribution d'énergie électrique.

4. Architecture (100) propulsive hybride selon la revendication 3, dans laquelle les convertisseurs (122) électroniques de puissance sont connectés entre lesdites deuxièmes sources (104) et lesdits systèmes électriques propulsifs (106).

5. Architecture (100) propulsive hybride selon la revendication 3, dans laquelle les convertisseurs (124) électroniques de puissance sont connectés entre lesdits moyens de ségrégation (120) et lesdits systèmes électriques propulsifs (106).

6. Architecture (100) propulsive hybride selon la revendication 3, comprenant des deuxièmes moyens de ségrégation (126) desdits systèmes électriques propulsifs (106) agencés sur le réseau (118) de distribution d'énergie électrique et configurés pour imposer un sens de circulation de la puissance électrique desdites deuxièmes sources (104) auxdits systèmes électriques propulsifs (106), et dans laquelle les convertisseurs (128) électroniques de puissance sont connectés entre lesdites deuxièmes sources (104) et lesdits systèmes électriques propulsifs (106), en parallèle desdits deuxièmes moyens de ségrégation (126).

7. Architecture (100) propulsive hybride selon l'une des revendications 1 à 6, dans laquelle lesdites première et deuxièmes sources (102, 104) sont ségréguées les unes des autres.

8. Architecture (100) propulsive hybride selon l'une des revendications 1 à 7, dans laquelle ladite première source (102) est un générateur à fréquence variable (112), et ladite architecture (100) comporte en outre un redresseur (114) passif connecté à ladite première source.

9. Architecture (100) propulsive hybride selon l'une des revendications 1 à 7, dans laquelle ladite première source (102) est une batterie et lesdites deuxièmes sources (104) sont des machines à aimants permanents.

10. Aéronef, notamment à décollage et atterrissage vertical, multi-rotors, **caractérisé en ce qu'**il comporte une architecture (100) propulsive hybride selon l'une des revendications 1 à 9.

## Patentansprüche

1. Hybride Antriebsarchitektur (100) für ein Luftfahrzeug, umfassend:
- eine erste Quelle (102), von einer ersten Art, elektrischer Energie,
- eine Vielzahl von zweiten Quellen (104), von einer zweiten Art, elektrischer Energie, wobei die zweite Art sich von der ersten Art unterscheidet,
- eine Vielzahl von elektrischen Antriebssystemen (106),
- ein Netz (118) zur Verteilung von elektrischer Energie, das die erste Quelle (102) und die zweiten Quellen (104) derart an die elektrischen Antriebssysteme (106) anschließt, dass jedes elektrische Antriebssystem (106) durch die erste Quelle (102) und durch eine der zweiten Quellen (104) versorgt wird,
- Antriebskanäle (108), wobei jeder Antriebskanal (108) die erste Quelle (102), eine der zweiten Quellen (104), eins der elektrischen Antriebssysteme (106) und einen Abschnitt des Netzes (118) zur Verteilung von elektrischer Energie umfasst,
wobei die Architektur (100) **dadurch gekennzeichnet ist, dass** sie weiter Folgendes umfasst:
- Mittel zur Trennung (120) der elektrischen Antriebssysteme (106), wobei die Mittel zur Trennung (120) an dem Netz (118) zur Verteilung von elektrischer Energie angeordnet und konfiguriert sind, um eine Zirkulationsrichtung der elektrischen Leistung der ersten Quelle (102) derart auf die elektrischen Antriebssysteme (106) aufzuerlegen, dass die Antriebskanäle (108) abgetrennt werden.

2. Hybride Antriebsarchitektur (100) nach Anspruch 1, wobei das Netz (118) zur Verteilung von elektrischer Energie ein Gleichstrom-Hochspannungsnetz ist und wobei die Mittel zur Trennung (120) Dioden umfassen.

3. Hybride Antriebsarchitektur (100) nach einem der Ansprüche 1 oder 2, umfassend elektronische Leistungswandler (122, 124, 128), die an das Netz (118) zur Verteilung von elektrischer Energie angeschlossen sind.

4. Hybride Antriebsarchitektur (100) nach Anspruch 3, wobei die elektronischen Leistungswandler (122) zwischen den zweiten Quellen (104) und den elektrischen Antriebssystemen (106) angeschlossen sind.

5. Hybride Antriebsarchitektur (100) nach Anspruch 3, wobei die elektronischen Leistungswandler (124) zwischen den Mitteln zur Trennung (120) und den elektrischen Antriebssystemen (106) angeschlossen sind.

6. Hybride Antriebsarchitektur (100) nach Anspruch 3, umfassend zweite Mittel zur Trennung (126) der elektrischen Antriebssysteme (106), die an dem Netz (118) zur Verteilung von elektrischer Energie angeordnet und konfiguriert sind, um eine Zirkulationsrichtung der elektrischen Leistung der zweiten Quellen (104) an die elektrischen Antriebssysteme (106) aufzuerlegen, und wobei die elektronischen Leistungswandler (128) zwischen den zweiten Quellen (104) und den elektrischen Antriebssystemen (106) parallel zu den zweiten Mitteln zur Trennung (126) angeschlossen sind.

7. Hybride Antriebsarchitektur (100) nach einem der Ansprüche 1 bis 6, wobei die erste und zweiten Quellen (102, 104) voneinander getrennt sind.

8. Hybride Antriebsarchitektur (100) nach einem der Ansprüche 1 bis 7, wobei die erste Quelle (102) ein Generator mit variabler Frequenz (112) ist und die Architektur (100) weiter einen passiven Gleichrichter (114) beinhaltet, der an die erste Quelle angeschlossen ist.

9. Hybride Antriebsarchitektur (100) nach einem der Ansprüche 1 bis 7, wobei die erste Quelle (102) eine Batterie ist und die zweiten Quellen (104) Maschinen mit Permanentmagneten sind.

10. Multirotor-Luftfahrzeug, insbesondere zum vertikalen Abheben und Landen, **dadurch gekennzeichnet, dass** es eine hybride Antriebsstruktur (100) nach einem der Ansprüche 1 bis 9 beinhaltet.

## Claims

1. A hybrid propulsion architecture (100) for an aircraft, comprising:
- a first source (102), of a first type, of electrical energy,
- a plurality of second sources (104), of a second type, of electrical energy, said second type being different from said first type,
- a plurality of electrical propulsion systems (106),
- an electrical energy supply network (118) connecting said first source (102) and said second sources (104) to said electrical propulsion systems (106) such that each electrical propulsion system (106) is powered by said first source (102) and by one of said second sources (104),
- propulsion channels (108), each propulsion channel (108) comprising said first source (102), one of said second sources (104), one of said electrical propulsion systems (106), and a portion of the electrical energy supply network (118),
said architecture (100) being **characterized in that** it further comprises:
- means (120) for segregating said electrical propulsion systems (106), said segregation means (120) being arranged on the electrical energy supply network (118) and configured to impose a direction of flow of electric power from said first source (102) to said electrical propulsion systems (106) so that said propulsion channels (108) are segregated.

2. The hybrid propulsion architecture (100) according to claim 1, wherein the electrical energy supply network (118) is a High Voltage Direct Current network, and wherein said segregation means (120) comprise diodes.

3. The hybrid propulsion architecture (100) according to one of claims 1 or 2, comprising power electronic converters (122, 124, 128) connected to the electrical energy supply network (118).

4. The hybrid propulsion architecture (100) according to claim 3, wherein the power electronic converters (122) are connected between said second sources (104) and said electrical propulsion systems (106).

5. The hybrid propulsion architecture (100) according to claim 3, wherein the power electronic converters (124) are connected between said segregation means (120) and said electrical propulsion systems (106).

6. The hybrid propulsion architecture (100) according to claim 3, comprising second means (126) for segregating said electrical propulsion systems (106) arranged on the electrical energy supply network (118) and configured to impose a direction of flow of electric power from said second sources (104) to said electrical propulsion systems (106) and wherein the power electronic converters (128) are connected between said second sources (104) and said electrical propulsion systems (106), in parallel to said second segregation means (126).

7. The hybrid propulsion architecture (100) according to one of claims 1 to 6, wherein said first and second sources (102, 104) are segregated from each other.

8. The hybrid propulsion architecture (100) according to one of claims 1 to 7, wherein said first source (102) is a variable frequency generator (112), and said architecture (100) further comprises a passive rectifier (114) connected to said first source.

9. The hybrid propulsion architecture (100) according to one of claims 1 to 7, wherein said first source (102) is a battery and said second sources (104) are permanent magnet generators.

10. A multi-rotor aircraft, in particular with vertical take-off and landing, **characterised in that** it comprises a hybrid propulsion architecture (100) according to one of claims 1 to 9.
